# Europäisches Patentamt
# European Patent Office
# Office européen des brevets

(19)

(11) Veröffentlichungsnummer: **0 029 437**
**B1**

(12) ## EUROPÄISCHE PATENTSCHRIFT

(45) Veröffentlichungstag der Patentschrift:
**01.08.84**

(51) Int. Cl.³: **B 62 D 1/26,** A 01 D 69/04

(21) Anmeldenummer: **80900980.6**

(22) Anmeldetag: **16.05.80**

(86) Internationale Anmeldenummer:
**PCT/DE 80/00057**

(87) Internationale Veröffentlichungsnummer:
**WO 80/02540 (27.11.80** Gazette **80/27)**

(54) **REGELKREIS FÜR DIE AUTOMATISCHE LENKANLAGE EINES FAHRZEUGS.**

(30) Priorität: **16.05.79 DE 2919712**

(43) Veröffentlichungstag der Anmeldung:
**03.06.81 Patentblatt 81/22**

(45) Bekanntmachung des Hinweises auf die Patenterteilung:
**01.08.84 Patentblatt 84/31**

(84) Benannte Vertragsstaaten:
**FR**

(56) Entgegenhaltungen:
**DE - A - 2 738 328**
**DE - B - 2 751 449**
**GB - A - 1 139 395**
**GB - A - 1 356 953**
**GB - A - 1 428 887**
**US - A - 2 904 056**

(73) Patentinhaber: **ZAHNRADFABRIK FRIEDRICHSHAFEN AKTIENGESELLSCHAFT, Löwentaler Strasse 100 Postfach 2520,**
**D-7990 Friedrichshafen 1 (DE)**

(72) Erfinder: **ARMIN, Lang, Rheinstrasse 10,**
**D-7070 Schwäbisch Gmünd (DE)**

(74) Vertreter: **Raue, Reimund, Zahnradfabrik Friedrichshafen AG Löwentaler Strasse 100 Postfach 2520,**
**D-7990 Friedrichshafen 1 (DE)**

## Beschreibung

Die Erfindung bezieht sich auf einen Regelkreis entsprechend dem Oberbegriff von Anspruch 1, wie er aus der DE-OS 2 738 328, bekanntgeworden ist.

Nach diesem Stand der Technik werden die Ausgangssignale der Fühler in Form von Flüssigkeitsdrücken oder Volumenverschiebungen von Flüssigkeiten einem schwenkbar gelagerten Waagebalken bzw. Differentialhebel zugeführt, der beide Ausgangssignale miteinander vergleicht. Den Fühlern sind zur Erzeugung der Ausgangssignale aktive Geber zugeordnet, nämlich solche, die im Sinne einer Pumpe einen Druck oder eine Volumenverschiebung als Reaktion auf die Einwirkung der Leitlinie auf den Geber erzeugen. Konstruktionen derartiger Geber sind aufwendig. Wegen der vom Geber aufzubringenden Arbeit ist stets eine Mindestbetätigungskraft erforderlich, worunter die Feinfühligkeit leidet. Schliesslich müssen die zu den Gebern führenden Leitungen jeweils sorgfältig entlüftet werden.

### Aufgabe, Lösung

Durch die vorliegende Erfindung soll ein Vergleicher geschaffen werden, bei dem die den Fühlern zugeordneten Geber einfachere Bauteile sein können, die darüber hinaus keine Arbeit im Sinne einer Pumpe zu leisten brauchen. Die Geber sollen auch dann einwandfrei arbeiten, wenn die zu ihnen führenden Leitungen nicht vollständig entlüftet sind.

Diese Aufgabe wird durch die vorliegende Erfindung gemäss Anspruch 1 gelöst. Anstelle von Gebern in Form von Pumpen werden nach der Erfindung Verstelldrosseln verwendet, die auf einen Flüssigkeitsstrom einwirken, der von Druckräumen des Vergleichers über die Verstelldrosseln zu einer Rücklaufleitung führt. Zur Betätigung der Verstelldrosseln ist nur eine vernachlässigbar kleine Arbeit erforderlich, die die Feinfühligkeit des Vergleichers nicht beeinträchtigt. Dadurch, dass im Betrieb ein Flüssigkeitsstrom von den Druckräumen des Vergleichers zu den Verstelldrosseln aufrechterhalten wird, ist eine sorgfältige Entlüftung der Leitungen nicht mehr erforderlich, da evtl. Luftblasen im Betrieb von selbst aus den Leitungen hinausbefördert werden. Schliesslich sind Verstelldrosseln als einfache und billige Bauteile zu fertigen.

### Erläuterung der Erfindung

Die Erfindung wird im folgenden anhand einer Prinzipdarstellung und eines Ausführungsbeispieles im Zusammenhang mit den Zeichnungen erläutert:

Fig. 1 ist eine Prinzipdarstellung des Vergleichers und von Teilen des Fahrzeuges und der Leitlinien;

Fig. 2 ist ein Axialschnitt durch den Vergleicher;

Fig. 3 zeigt den Vergleicher teilweise in Seitenansicht, teilweise im Schnitt unter einem rechten Winkel zur Schnittebene in Fig. 2 betrachtet;

Fig. 4 ist ein waagrechter Schnitt nach Linie IV–IV in Fig. 2.

### Prinzip der Erfindung

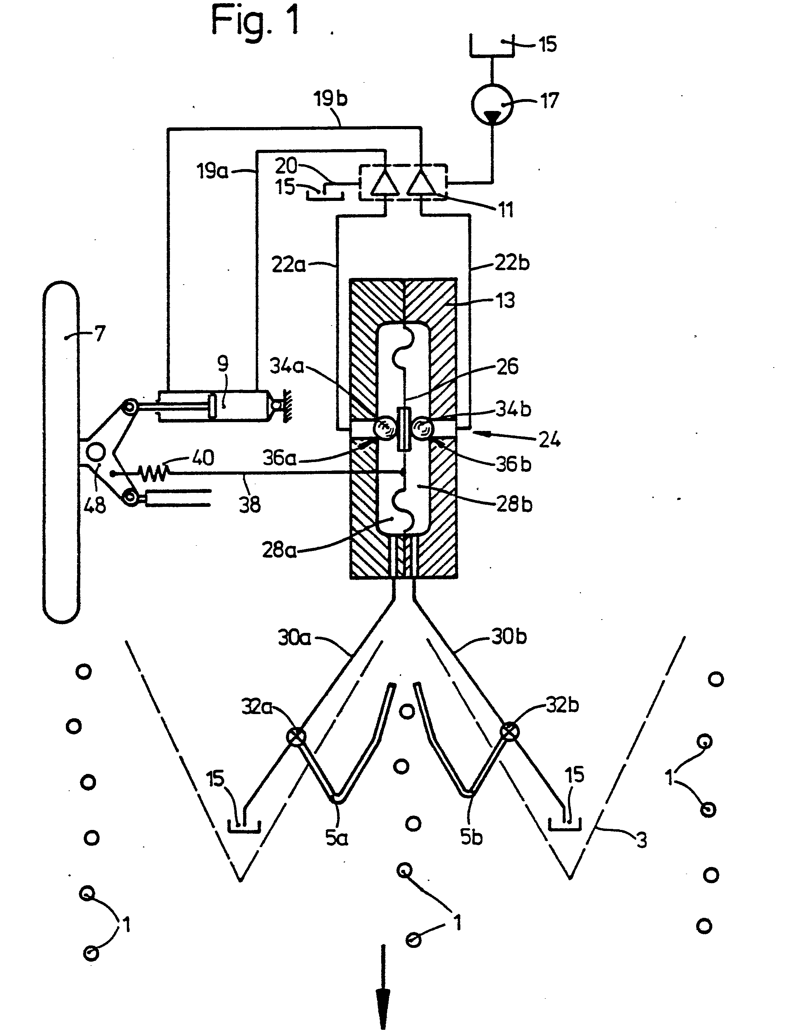

Fig. 1 zeigt die abzutastenden Leitlinien 1, z.B. in Form von Reihen von Stengeln von Maispflanzen. Mit 3 sind Führungsteile des Erntefahrzeuges bezeichnet. Das Fahrzeug hat zwei Fühler 5a und 5b, die gemeinsam eine der Leitlinien abtasten. Als gelenkter Fahrzeugteil oder Lenkorgan 7 ist ein Rad dargestellt. Das Fahrzeug hat einen Lenkmotor 9 und ein diesen ansteuerndes Lenkventil 11, wie es z.B. aus der DE-OS 2 729 766, dort Fig. 5, bekannt ist. Es ist hier nur schematisch dargestellt. Der Vergleicher selbst ist in einem Gehäuse 13 untergebracht.

Das Steuerventil 11 wird aus einem Flüssigkeitstank 15 von einer Hochdruckpumpe 17 gespeist. Es ist durch Leitungen 19a und 19b mit dem Lenkmotor 9 verbunden, durch eine Leitung 20 mit dem Tank 15. Im Betrieb fliessen durch das Steuerventil 11 und durch Steuerleitungen 22a und 22b Steuerströme in der Grössenordnung von 0,5 l/min in Richtung auf den mit 24 bezeichneten Vergleicher.

Abweichend vom Stand der Technik ist der Vergleicher weder mit einem Waagebalken noch mit einem Differentialhebel ausgestattet, sondern mit einer Membran 26, die eine Druckkammer des Gehäuses 13 flüssigkeitsdicht in zwei Druckräume 28a und 28b unterteilt. Im Gehäuse 13 sind zwei Hubventile vorgesehen, deren hier als Kugeln dargestellte Ventilkörper 34a und 34b beiderseits der Membran 26 angeordnet sind und mit Ventilsitzen 36a und 36b zusammenwirken. Die Steuerleitungen 22a und 22b führen zu diesen Ventilsitzen.

Die Steuerleitung 22a ist mit dem Druckraum 28a verbunden. Dieser steht durch eine weitere Steuerleitung 30a mit dem Tank 15 in Verbindung. In die Steuerleitung 30a ist eine Verstelldrossel 32a eingeschaltet, die vom Fühler 5a her betätigt wird. Sie drosselt den vom Steuerventil 11 und dem Druckraum 28a herkommenden Flüssigkeitsstrom mit zunehmendem Ausschlag des Fühlers 5a und erhöht damit entsprechend den Druck im Druckraum 28a. Entsprechendes gilt für die rechts in Fig. 1 dargestellten Steuerleitungen und Teile, die alle mit dem Index b bezeichnet sind.

Die Membran 26 ist, ausser durch die Drücke in den Druckräumen 28a und 28b, noch über eine mechanische Verbindung 38 mit dem Lenkorgan 7 oder statt dessen mit einem bewegten Teil des Lenkmotors 9 verstellbar. Die Betätigungskraft ist durch die Zwischenschaltung einer Feder 40 abhängig von der Stellung des Lenkorgans 7.

### Prinzipielle Funktion

In der gezeichneten Neutralstellung fliesst durch die Steuerleitungen 22a und 22b vom Lenkventil 11 her ein Steuerstrom durch die geöffneten Ventilsitze 36a und 36b in die Druckräume 28a und 28b. Von dort fliesst der Steuerstrom durch die Steuerleitungen 30a und 30b und die Verstelldrosseln 32a und 32b zum Tank 15 zurück. In der Neutralstellung sind die beiden Verstelldrosseln gleich weit geöffnet, die Feder 40 und die Membran 26 sind kräftefrei und in den Steuerleitungen 22a und 22b herrschen gleiche Drücke. Durch die Regelungsmechanik des Steuerventils 11 werden diese Drücke durch die Leitungen 19a und 19b auf den Lenkmotor 9 übertragen, der dadurch ebenfalls kräftefrei ist.

Wird das Lenkorgan 7 beispielsweise im Sinne einer Rechtskurve ausgelenkt und dadurch die Feder 40 gedehnt, ohne dass die Fühler 5a oder 5b betätigt werden, d.h. ohne dass sich beiderseits der Membran 26 ein Differenzdruck aufbauen kann, so wird der Ventilkörper 34a entsprechend der Auslenkung der Membran gegen den Sitz 36a gedrückt, in der Steuerleitung 22a ein Druck aufgebaut, der über das Lenkventil 11 auf die Leitung 19a übertragen wird und den Lenkmotor 9, entgegen der Auslenkung des Lenkorgans 7, betätigt. Hiermit tritt die gewünschte Stabilisierung ein. Entsprechendes gilt für eine Auslenkung in entgegengesetzter Richtung.

Verharrt dagegen das Lenkorgan 7 in der gezeichneten Geradeausfahrtstellung und wird beispielsweise der Fühler 5a in Fig. 1 nach links geschwenkt, verengt sich der Querschnitt der Verstelldrossel 32a und in dem Druckraum 28a baut sich ein Druck auf, der die Membran 26 nach rechts bewegt. Dadurch wird der Ventilkörper 34b gegen den Sitz 36b gedrückt und in der Steuerleitung 22b baut sich ein Druck auf, der über das Lenkventil 11 den Lenkmotor 9 im Sinne einer Rechtskurve verstellt. Hierdurch wird die Feder 40 gedehnt und es tritt der oben beschriebene stabilisierende Rückwirkungsmechanismus in Funktion.

Ausführungsbeispiel

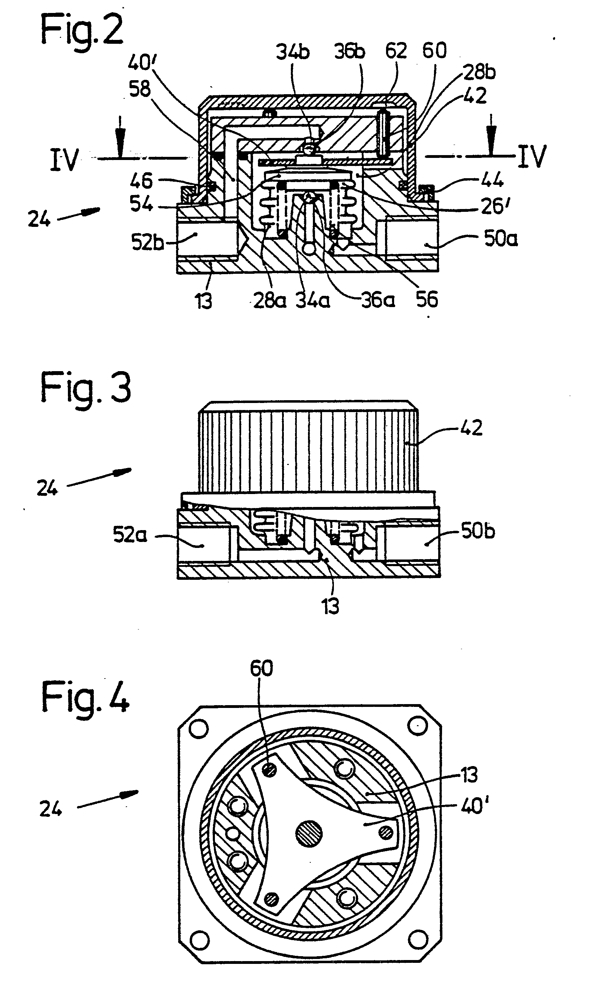

Fig. 2 bis 4 zeigen den konstruktiven Aufbau des Vergleichers 24. Alle übrigen Teile der Prinzipdarstellung nach Fig. 1 sind an sich bekannt. Als Verstelldrosseln 32a und 32b können Drehschieberventile verwendet werden oder Düse-Nadel-Systeme oder Düse-Prallplatten-Systeme.

Der Vergleicher 24 hat ein Gehäuse 13 mit einer Betätigungskappe 42, die am Gehäuse durch einen Haltering 44 drehbar befestigt und durch eine Dichtung 46 gegenüber dem Gehäuse abgedichtet ist. Das Gehäuse 13 kann ortsfest, z.B. am Fahrzeugrahmen, angebracht sein, während die Betätigungskappe 42 drehfest an einem drehbaren Teil des Lenkorgans angebracht sein kann, z.B. an einem Lenkhebel 48 (Fig. 1).

Im Gehäuse 13 ist ein Faltenbalg 26' angeordnet, der die Druckflüssigkeitskammer in den inneren Druckraum 28a und den äusseren Druckraum 28b trennt. Der innere Druckraum 28a ist mit einem Anschluss 50a, der äussere Druckraum 28b mit einem Anschluss 50b (Fig. 3) verbunden. Das Gehäuse 13 hat insgesamt vier Anschlüsse. Die beiden verbleibenden Anschlüsse, nämlich 52a und 52b, führen zu den beiden Ventilsitzen. So führt der Anschluss 52b durch einen abgewinkelten Kanal 58 zum Ventilsitz 36b für den Ventilkörper 34b. Der Anschluss 52a (Fig. 3) führt zum Ventilsitz 36a für den Ventilkörper 34a. Die beiden als Kugeln ausgestalteten Ventilkörper werden durch ein Druckstück 54 betätigt, das mit dem Faltenbalg 26' druckdicht verbunden ist.

Zur mechanischen Betätigung der als Faltenbalg 26' ausgestalteten Membran dienen zwei Federn, die beide auf das Druckstück 54 einwirken. Unterhalb des Druckstückes ist eine Schraubendruckfeder angeordnet, die sich am Gehäuse 13 abstützt und als Vorspannfeder 56 dient. Oberhalb des Druckstückes 54 ist eine Arbeitsfeder 40' vorgesehen, die als dreieckige Biegeblattfeder (Fig. 4) ausgestaltet ist. Die drei Enden der Feder stützen sich über drei Stössel 60, die im Gehäuse 13 lotrecht verschiebbar gelagert sind, an der Betätigungskappe 42 ab, und zwar an Hubkurven 62, die in die ebene Innenfläche der Betätigungskappe eingearbeitet sind. Alle drei Hubkurven haben gleiche Form. Bei einer Drehbewegung der Betätigungskappe 42 bewegen sie die Stössel 60 in axialer Richtung.

Die Vorspannfeder 56 erhält eine möglichst geringe Federsteife.

Funktion

Die prinzipielle Funktion wurde oben bereits beschrieben. Es genügt hier daher eine Beschreibung der Funktion des Ausführungsbeispieles des Vergleichers.

In Neutralstellung der Betätigungskappe 42 sind die Vorspannfeder 56 und die Arbeitsfeder 40' so gegeneinander verspannt, dass die Ventilkörper 34a und 34b von ihren Ventilsitzen 36a und 36b gleich weit entfernt sind. Bei einer Drehbewegung der Betätigungskappe wird dieser Gleichgewichtszustand gestört. Zum Beispiel werden die Stössel 60 nach oben bewegt und dadurch die Arbeitsfeder 40' entlastet. Infolgedessen überwiegt die Kraft der Vorspannfeder, wodurch der Ventilkörper 34b mehr gegen seinen Ventilsitz gedrückt wird. Das Umgekehrte gilt für Drehung der Betätigungskappe im Gegensinne und eine Verstärkung der Kraft der Arbeitsfeder 40', wodurch der Ventilkörper 34a gegen dessen Sitz gedrückt wird.

Als Ergebnis der Beeinflussungen durch die Fühler 5a und/oder 5b und das Lenkorgan 7 bildet der Vergleicher eine Differenzgrösse, die sich als Druckdifferenz in den Steuerleitungen 22a und 22b auswirkt und das Lenkventil 11 beeinflusst.

Vorteile des Ausführungsbeispiels

Durch die Verwendung einer Hubkurve (d.h. der drei einander gleichenden Hubkurven) ist eine beliebige Übertragungsfunktion zwischen Drehwinkel und Steuerdruck darstellbar, die es gestattet, beispielsweise die stabilisierende Wirkung im Geradeausfahrbereich zu erhöhen oder den Einschlagwinkel auf einen bestimmten Wert zu begrenzen.

Die Betätigung der Arbeitsfeder 40' vom Lenkorgan her ist zwar mit Reibung behaftet, nämlich durch Drehung der Betätigungskappe 42 am Gehäuse 13, Reibung der Hubkurven 62 an den Stössseln 60 und Verschiebung der Stössel selbst. Dies ist aber unschädlich, da diese Reibungskräfte im Kraftfluss vor der Arbeitsfeder 40′ auftreten. Diese Reibungskräfte werden über den Lenkhebel 48 vom Lenkmotor 9 aufgebracht und fallen daher nicht ins Gewicht. Dagegen sind der Faltenbalg 26′ und die Vorspannfeder 56 als reibungsfreie Organe anzusehen. Infolgedessen arbeitet die Regelungsmechanik des Vergleichers praktisch hysteresefrei.

**Patentansprüche**

1. Regelkreis für die automatische Lenkanlage eines Fahrzeuges mit folgenden Merkmalen:
a) das Fahrzeug ist mit zwei Fühlern (5a, 5b) ausgerüstet, die zwei zu einander parallele Leitlinien oder gemeinsam eine Leitlinie abtasten;
b) ein Vergleicher (24) bildet als Eingangsgrösse für den durch ein Lenkventil gebildeten Regler die Differenz aus drei Grössen, nämlich den beiden Ausgangssignalen der Fühler, die Funktionen der Abstände von der oder den Leitlinien sind, und einer aus der Lenkung des Fahrzeuges rückgeführten Hilfsregelgrösse;
c) der Vergleicher (24) steht über zwei hydraulische Leitungen (30a, 30b) mit den Fühlern (5a, 5b) in Verbindung und ist durch deren Ausgangsgrössen in Form von Drücken beeinflussbar;
d) der Vergleicher hat in einer Druckflüssigkeitskammer ein durch die genannten Drücke verstellbares Glied (26, 26′), das auf die Verschlussteile zweier Hubventile einwirkt, und das durch Flüssigkeitsströme den das Differenzsignal darstellenden Flüssigkeitsdruck steuert, wobei die Flüssigkeitsströme durch die Kammer strömen und durch den Vergleicher gedrosselt werden und
e) das verstellbare Glied (26, 26′) steht mit einem Lenkorgan (d. h. gelenkten Fahrzeugteil) in mechanischer Antriebsverbindung, wobei die mechanische Antriebsverbindung zwischen dem Lenkorgan und dem verstellbaren Glied eine Feder (40, 40′) enthält; gekennzeichnet durch folgende Merkmale:
f) das verstellbare Glied ist ein die Druckflüssigkeitskammer in zwei Druckräume (28a, 28b) unterteilendes elastisches Trennglied (26, 26′);
g) hydraulische Leitungen (30a, 30b) führen von den Druckräumen (28a, 28b) zu einer Rücklaufleitung (15);
h) in den hydraulischen Leitungen (30a, 30b) sind Verstelldrosseln (32a, 32b) angeordnet, die mit den Fühlern (5a, 5b) in mechanischer Antriebsverbindung stehen.

2. Vergleicher nach Anspruch 1, gekennzeichnet durch folgende Merkmale:
a) Das Trennglied ist als Faltenbalg (26′) ausgestaltet;
b) auf den Faltenbalg wirken in entgegengesetzter Richtung zwei Federn, nämlich eine Vorspannfeder (56) und eine Arbeitsfeder (40′) ein;
c) die Arbeitsfeder dient als elastisches Glied im Zuge der Antriebsverbindung (38) und ist über eine von den Lenkorganen (7) verstellbare Hubkurve (62) steuerbar.

3. Vergleicher nach Anspruch 2, gekennzeichnet durch folgende Merkmale:
a) Die Vorspannfeder (56) ist eine Schraubendruckfeder;
b) die Arbeitsfeder (40′) ist eine Biegeblattfeder, die über Stössel (60) betätigbar ist und
c) die Stössel stützen sich an Hubkurventeilen (62) in einer Betätigungskappe (42) ab, die gegenüber dem Gehäuse (13) des Vergleichers drehbar ist und
d) Gehäuse und Betätigungskappe des Vergleichers stehen je für sich mit dem Fahrzeugrahmen und dgl. und einem Lenkorgan (7) in mechanischer Antriebsverbindung.

**Claims**

1. A control circuit for an automatic steering system of a vehicle, wherein:
a) The vehicle is provided with two sensors (5a, 5b), scanning two parallel guiding lines or one common guiding line;
b) a comparator (24) is providing the difference of three values as an input signal to the controller consisting of a steering valve, said values being the two output signals of the sensors depending on their distances from the one or both guiding lines, and an objective feed back variable provided by the vehicle steering system;
c) the comparator (24) is connected to the sensors (5a, 5b) via two hydraulic lines (30a, 30b), and their output signals or fluid pressures influence that comparator;
d) the comparator (24) includes in a hydraulic pressure chamber a variable member (26, 26′) set by said pressures, which member is actuating on the closing elements of two operating valves, and the member is controlling the hydraulic pressure representing the difference signal by means of hydraulic flow volumes, whereby the liquid volume flows through the chamber and is throttled by the comparator, and
e) the variable member (26, 26′) is connected to a steered element (that is a steered vehicle component) by means of a mechanical drive connection, and the mechanical drive connection between the steered element and the variable element is including a spring (40, 40′);
characterized in that:
f) the variable member is a flexible partition element (26, 26′) dividing one pressure chamber into two subchambers (28a, 28b);
g) hydraulic lines (30a, 30b) are leading from the pressure subchambers (28a, 28b) to a return line (15);
h) in the hydraulic lines (30a, 30b) variable throttles (32a, 32b) are arranged in mechanical operating connection with said sensors (5a, 5b).

2. A comparator according to claim 1, characterized in that:
a) the partition or separating element is designed as bellows (26′);

b) the bellows is acted on by two springs, arranged in opposite direction to each other, i.e. a preloading spring (56) and an operating spring (40');

c) the operating spring is used as a flexible member within the operating connection (38) and it can be controlled via a control cam (62) varied by the steered element (7).

3. Comparator according to claim 2, characterized in that:

a) the preloading spring (56) is a coil spring;

b) the operating spring (40') is a bending leaf spring, acuated by means of plungers (60),

c) said plungers are supported by control cam elements (62) in an operating cap (42) being pivotally mounted with regard to the housing (13) of said comparator, and

d) said housing and said operating cap of said comparator are mechanically connected individually with the vehicle chassis and simular elements and a steered element (7).

**Revendications**

1. Circuit de réglage pour la direction automatique d'un véhicule, dans lequel:

a) le véhicule est équipé de deux palpeurs (5a, 5b) pour palper sur deux lignes de guidage parallèles entre elles ou sur une ligne de guidage commune,

b) un comparateur (24) fournit à un régulateur constitué par une soupape de direction un signal d'entrée qui est une grandeur différentielle tirée de trois signaux, lesquels sont les deux signaux de sortie des palpeurs, en fonction des écarts par rapport à la ou les lignes de guidage, et un signal auxiliaire dérivé du mécanisme de direction du véhicule,

c) le comparateur (24) est relié aux palpeurs (5a et 5b) par deux conduites hydrauliques (30a, 30b) et il est assujetti à leurs grandeurs de sortie délivrées sous forme de pressions,

d) le comparateur comporte, dans une cavité sous pression hydraulique, un organe (26, 26') mobile sous l'effet desdites pressions, qui agit sur les organes obturateurs de deux soupapes de réglage et qui commande par des courants de liquide la pression hydraulique constituant la grandeur différentielle, ces courants de liquide s'écoulant à travers ladite cavité et étant retenus par le comparateur, et

e) l'organe mobile (26, 26') est relié à un organe de direction (c'est-à-dire un élément de la direction du véhicule) par une liaison mécanique de commande, cette liaison mécanique entre l'organe de direction et l'organe mobile comportant un ressort (40, 40'), caractérisé en ce que:

f) l'organe mobile est une cloison élastique (26, 26') qui partage la cavité sous pression hydraulique en deux chambres de pression (28a, 28b),

g) des conduites hydrauliques (30a, 30b) relient les chambres de pression (28a, 28b) à une conduite de retour (15),

h) des chicanes de réglage (32a, 32b) sont montées dans lesdites conduites hydrauliques (30a, 30b) et sont reliées mécaniquement aux palpeurs (5a, 5b).

2. Comparateur selon la revendication 1, caractérisé en ce que:

a) la cloison est un soufflet (26'),

b) le soufflet est sollicité par deux ressorts dans les directions opposées, ces ressorts étant un ressort de précontrainte (56) et un ressort de travail (40'),

c) le ressort de travail sert d'élément élastique dans ladite liaison mécanique de commande (38) et il est assujetti à une courbe directrice (62) dont la position est commandée par des organes de direction (7).

3. Comparateur selon la revendication 2, caractérisé en ce que:

a) le ressort de précontrainte (56) est un ressort hélicoïdal de compression,

b) le ressort de travail (40') est une lame-ressort, qui est assujettie à des poussoirs (60),

c) les poussoirs sont en appui contre des éléments de courbes directrices d'un capuchon de commande (42) qui est pivotant par rapport au corps (13) du comparateur, et

d) le corps et le capuchon de commande du comparateur sont reliés mécaniquement avec le châssis du véhicule, respectivement avec le châssis du véhicule et un organe de direction (7).

Fig. 1

# Fig.2

# Fig.3

# Fig.4